# EUROPEAN PATENT SPECIFICATION

(11) **EP 2 762 051 B1**
(45) Date of publication and mention of the grant of the patent: **29.04.2020**
(21) Application number: 13197482.6
(22) Date of filing: 16.12.2013
(51) Int. Cl.: A47L 11/40

(54) **Robot cleaner and control method thereof**
Reinigungsroboter und Steuerungsverfahren dafür
Robot nettoyeur et son procédé de commande

(30) Priority: 31.01.2013 KR 20130011520
(43) Date of publication of application: 06.08.2014
(73) Proprietor: Samsung Electronics Co., Ltd., Gyeonggi-do 16677 (KR)
(72) Inventor: Jung, Jae Young, Gyeonggi-do (KR); Lee, Sahng Jin, Gyeonggi-do (KR); Jung, Hyun Soo, Gyeonggi-do (KR); Kim, Dong Won, Gyeonggi-do (KR); Lee, Dong Hoon, Gwang-ju (KR)
(74) Representative: Walaski, Jan Filip

(56) References cited:
- EP-A2- 1 762 165
- CN-A- 102 078 169
- CN-U- 202 341 952
- DE-A1-102011 003 158
- US-A1- 2002 000 813

## Description

The present invention relates to a robot cleaner for improving efficiency of wet cleaning, and a control method thereof.

In general, a robot cleaner automatically cleans an area to be cleaned by sucking up foreign substances such as dust from a floor while autonomously traveling about the cleaning area without user manipulation.

The robot cleaner cleans a floor using a cleaning tool while autonomously traveling about a cleaning area. During cleaning, the robot cleaner senses obstacles or walls located in an area to be cleaned through various sensors, and controls a cleaning path or a cleaning operation based on the sensed results.

Most of robot cleaners developed so far clean a floor using a dry-type cleaning method of sucking up dust from a floor.

However, when a robot cleaner cleans a floor according to the dry-type cleaning method, some foreign substances may remain on a floor even after cleaning is completed since the robot cleaner cannot suck up foreign substances stuck on the floor or being larger than a specific size.

In order to overcome the problem, a robot cleaner for wet cleaning in which a pad is installed in the lower part of a main body to wipe a floor with water has been developed.

However, when a user cleans a floor using a robot cleaner for wet cleaning, the user must check an amount of water of a pad and add water to the pad if necessary, which causes the user's inconvenience.

CN 102 078 169 A discloses a floor cleaning robot with a water tank and a liquid level sensor.

The invention is defined by the independent claims, preferred embodiments are defined by the dependent claims.

In an aspect of one or more embodiments, there is provided a robot cleaner for measuring an amount of water of a cleaning tool based on capacitance, and a control method thereof.

In an aspect of one or more embodiments, there is provided a robot cleaner for automatically adding an appropriate amount of water to a cleaning tool, and a control method thereof.

According to an aspect of the invention, there is provided a robot cleaner according to claim 1.

In an aspect of one or more embodiments, there is provided a robot cleaner which includes: a cleaning tool assembly cleaning a floor with water; a capacitance measurer measuring capacitance of the cleaning tool assembly; and a controller calculating an amount of water of the cleaning tool assembly based on the measured capacitance, and controlling cleaning of the cleaning tool assembly based on the calculated amount of water.

According to an aspect of the invention, there is provided a control method of a cleaning robot according to claim 15.

According to an aspect, by measuring an amount of water of a cleaning tool installed in a robot cleaner based on capacitance, it is possible to accurately measure an amount of water absorbed in a cleaning tool.

By designing the robot cleaner such that no air gap is formed between the housing of a capacitance measurer and capacitance sensors and such that the capacitance measurer is buried in a pad of a cleaning tool assembly in order to prevent the capacitor sensors from being influenced by the temperature and humidity of air, it is possible to accurately measure an amount of water absorbed in the pad of the cleaning tool assembly.

Also, since the capacitance sensors are used as measurers for measuring an amount of water, it is possible to reduce a manufacturing cost of the robot cleaner.

In addition, by automatically adding an appropriate amount of water to the cleaning tool based on a measured amount of water, it is possible to uniformly maintain the efficiency of cleaning and consequently improve cleaning performance, resulting in improvement of a user's satisfaction.

These and/or other aspects of embodiments will become apparent and more readily appreciated from the following description of embodiments, taken in conjunction with the accompanying drawings of which:
FIG. 1 is a perspective view of a robot cleaner according to an exemplary embodiment;
FIG. 2 is a bottom view of a robot cleaner according to an exemplary embodiment;
FIG. 3A is a bottom view of a robot cleaner when a cleaning tool assembly has been separated from a main body;
FIG. 3B is a cross-sectional view of the robot cleaner of FIG. 3A, cut along an x-x' line ;
FIG. 4 is an exploded perspective view of a cleaning tool assembly of a robot cleaner, according to an exemplary embodiment;
FIG. 5A is an exploded perspective view illustrating a main body and a capacitance measurer of a robot cleaner, according to an exemplary embodiment;
FIG. 5B is a perspective view illustrating a coupled state of a main body and a capacitance measurer of a robot cleaner, according to an exemplary embodiment;
FIG. 6 is a perspective view of a water-feeding unit of a robot cleaner, according to an exemplary embodiment;
FIG. 7A is a perspective view of a capacitance measurer installed in a robot cleaner, according to an exemplary embodiment;
FIG. 7B, (a) and (b), illustrates a printed circuit board (PCB) substrate of the capacitance measurer installed in the robot cleaner, according to an exemplary embodiment;
FIG. 8, (a) and (b), is an exploded perspective view and a cross-sectional view illustrating a housing and a cover of the capacitance measurer installed in the robot cleaner, according to an exemplary embodiment;
FIG. 9 is a perspective view of a capacitance measurer installed in a robot cleaner, according to an exemplary embodiment;
FIGS. 10A and 10B are cross-sectional views illustrating a state in which a capacitance measurer has been installed in a robot cleaner, according to an exemplary embodiment;
FIG. 11 is a block diagram illustrating a configuration for controlling a robot cleaner, according to an exemplary embodiment;
FIG. 12, (a) and (b), illustrates a method in which a capacitance measurer installed in a robot cleaner measures capacitance, according to an exemplary embodiment; and
FIG. 13 is a flowchart illustrating a method of controlling a robot cleaner, according to an exemplary embodiment.

Reference will now be made in detail to embodiments, examples of which are illustrated in the accompanying drawings, wherein like reference numerals refer to like elements throughout.

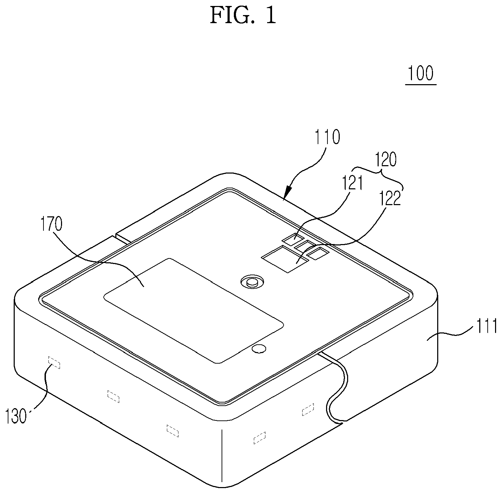

FIGS. 1 to 4 are views illustrating a robot cleaner 100 according to an exemplary embodiment.

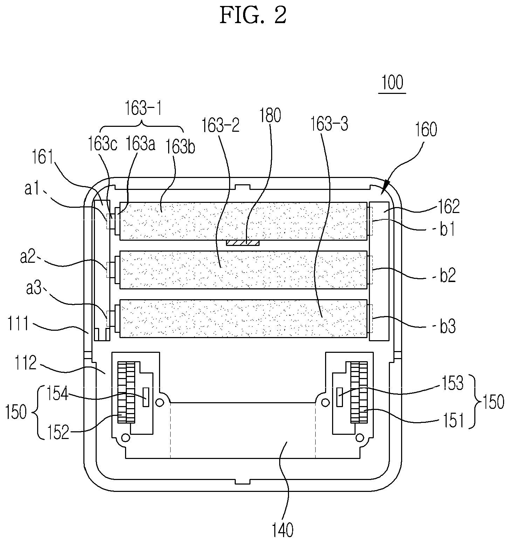

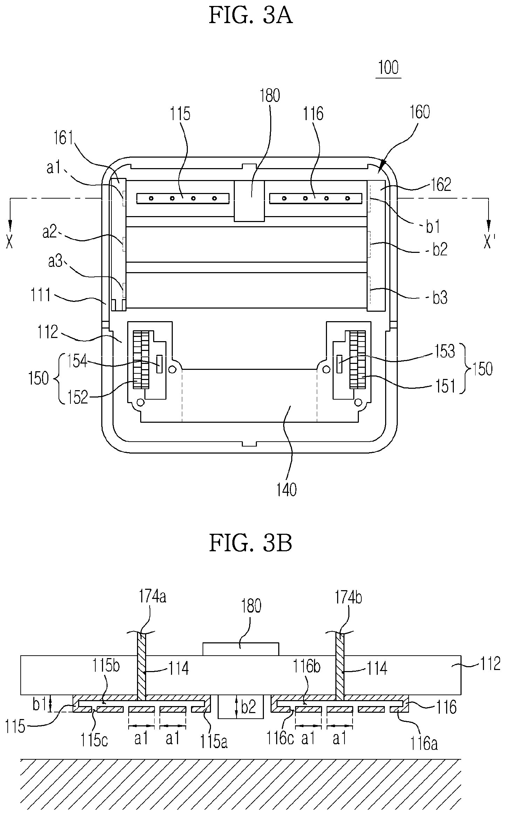

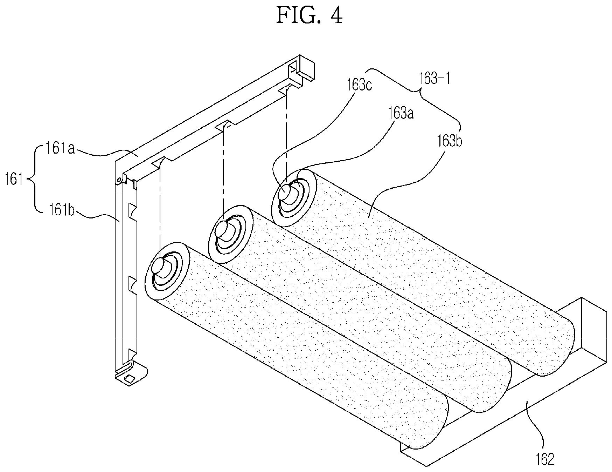

FIG. 1 is a perspective view of the robot cleaner 100, FIG. 2 is a bottom view of the robot cleaner 100, FIG. 3A is a bottom view of the robot cleaner 100 when a cleaning tool assembly 160 has been separated from a main body 110, FIG. 3B is a cross-sectional view of the robot cleaner 100, cut along an x-x' line, and FIG. 4 is an exploded perspective view of the cleaning tool assembly 160 of the robot cleaner 100.

Referring to FIG. 1, the robot cleaner 100 includes the main body 110 constructing an external appearance of the robot cleaner 100, a user interface 120 mounted on the upper part of the main body 110 to receive driving information, schedule information, etc. and display operation information, and one or more obstacle detectors 130 for detecting obstacles in an area to be cleaned.

The user interface 120 includes an input unit 121 for receiving schedule information, driving information, etc. and a display unit 122 for displaying schedule information, a battery level, a water level of a water tank, a driving mode, etc. The driving mode includes a cleaning mode, a standby mode, a docking mode, etc.

The obstacle detectors 130 may be distance sensors for measuring a distance between the robot cleaner 100 and an obstacle, as well as detecting existence/absence of an obstacle. The obstacle detectors 130 may be installed in the front, left, and right parts of the main body 110 to detect obstacles located in the front, left, and right directions from the robot cleaner 100 and output obstacle detection signals.

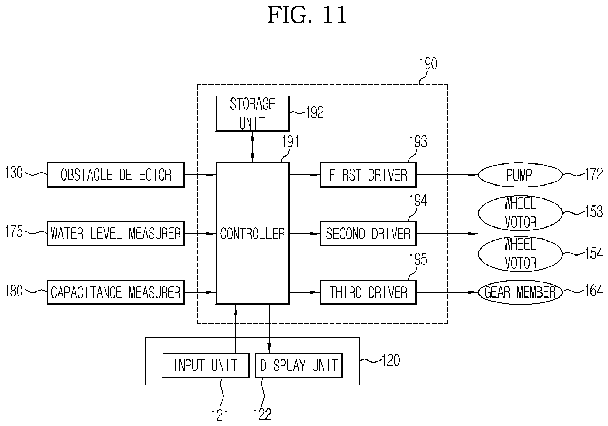

As illustrated in FIG. 2, the main body 110 of the robot cleaner 100 includes a bumper 111 disposed to surround the front and side parts of the main body 110 to cushion the impact when the robot cleaner 100 collides with an obstacle, and a frame 112 in which a power supply 140, a traveling assembly 150, a cleaning tool assembly 160, a driving module 190 (see FIG. 11), etc. are installed. Another bumper may be disposed to surround the rear part of the main body 110.

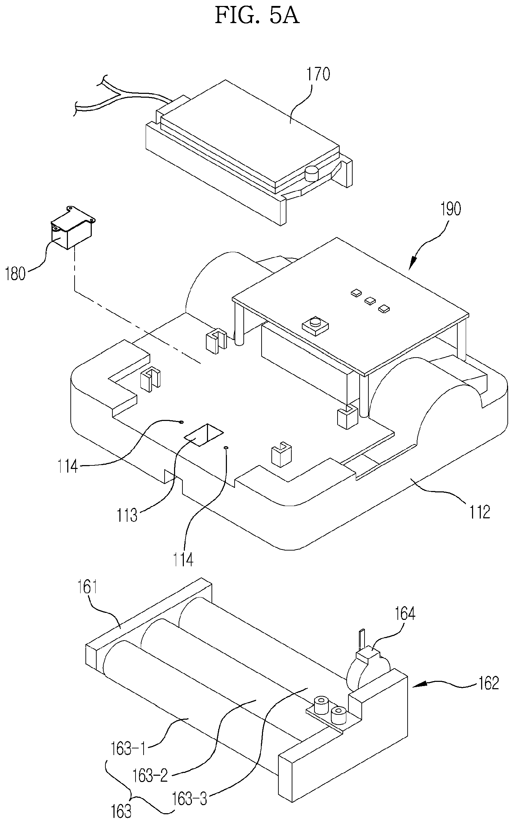

Also, the main body 110 of the robot cleaner 100 may further include an inserting hole 113 (see FIG. 5A) formed at a location corresponding to the cleaning tool assembly 160 in the frame 112, one or more water-feeding holes 114 formed around the inserting hole 113 to add water to the cleaning tool assembly 160, and first and second spraying members 115 and 116 disposed on the lower surface of the frame 112 and connected to the water-feeding holes 114 to spray water supplied through first and second channels 174a and 174b to the outside.

The inserting hole 113 is a hole which a capacitance measurer 180 is inserted into and installed in.

The capacitance measurer 180 may be installed in an arbitrary location, other than in the inserting hole 113, as long as it can contact a first drum-type pad member 163-1.

The water-feeding holes ¹14 are holes which the first and second channels 174a and 174b are inserted into and connected to.

The first and second spraying members 115 and 116 add water to the first drum-type pad member 163-1. The first and second spraying members 115 and 116 will be described in more detail with reference to FIGS. 3A and 3B, below.

As described above, FIG. 3A is a bottom view illustrating the robot cleaner 100 when the cleaning tool assembly 160 has been separated from the main body 110, and FIG. 3B is a cross-sectional view illustrating the robot cleaner 100 of FIG. 3A, cut along an x-x' line.

As illustrated in FIGS. 3A and 3B, the first and second spraying members 115 and 116 are disposed at locations corresponding to the water-feeding holes 114 on the lower part of the frame 112, and the capacitance measurer 180 is inserted into the inserting hole 113 (see FIG. 5A) formed in the lower part of the frame 112.

The first and second spraying members 115 and 116 and the capacitance measurer 180 may be arranged at a location corresponding to a pad member for wet cleaning. That is, the first and second spraying members 115 and 116 and the capacitance measurer 180 may be arranged over the first drum-type pad member 163-1.

As illustrated in FIG. 3B, the first spraying member 115 includes a main body 115a coupled to the frame 112, a main channel 115b formed in the main body 115a to receive water from the first channel 174a through the water-feeding hole 114, and a plurality of spraying holes 115c formed in the main body 115a and connected to the main channel 115b to discharge water contained in the main channel 115b to the outside.

The plurality of spraying holes 115c are formed at regular intervals of ai.

The second spraying member 116 includes a main body 116a coupled to the frame 112, a main channel 116b formed in the main body 116a to receive water from the second channel 174b through the water-feeding hole 114, and a plurality of spraying holes 116c formed in the main body 116a and connected to the main channel 116b to discharge water contained in the main channel 116b to the outside.

Likewise, the plurality of spraying holes 116c are formed at regular intervals of a1.

The first and second spraying members 115 and 116 are protruded toward a floor from the frame 112, and a length b1 by which the first and second spraying members 115 and 116 are protruded is shorter than a length b2 by which the capacitance measurer 180 is protruded from the frame 112 toward the floor.

That is, the capacitance measurer 180 inserted into the inserting hole 113 is further protruded toward the floor than the first and second spraying members 115 and 116.

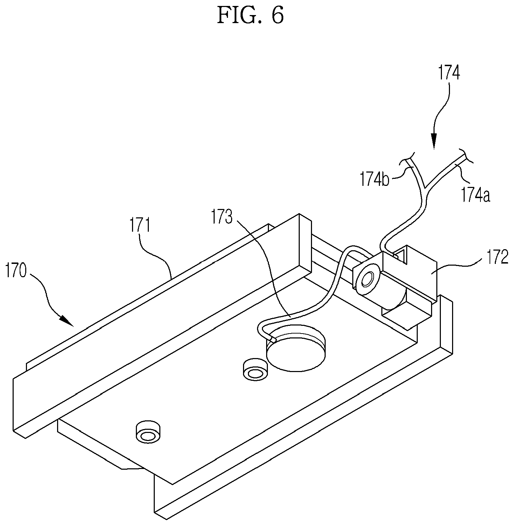

However, a single water-feeding hole may be formed in the frame 112. In this case, a channel of a water-feeding unit (water-feeder) 170 (see FIG. 6) may be inserted into and connected to the water-feeding hole, and the water-feeding hole may receive water through the channel, and then spray the water to the outside through a plurality of spraying holes.

Referring again to FIG. 2, the robot cleaner 100 includes the power supply 140 for supplying driving power to individual components, the traveling assembly 150 disposed in the rear, lower part of the main body 110 to move the main body 110, the cleaning tool assembly 160 disposed in the front, lower part of the main body 110 to wipe off foreign substances such as dust scattered on a floor with water, the water-feeding unit 170 (see FIG. 6) for adding water to the cleaning tool assembly 160, and the capacitance measurer 180 for measuring capacitance of the cleaning tool assembly 160. The front and rear parts of the main body 110 have been determined based on a traveling direction of the main body 110 upon cleaning.

The robot cleaner 100 further includes the driving module 190 for driving the traveling assembly 150, the cleaning tool assembly 160, the water-feeding unit 170, and the capacitance measurer 180 using power supplied from the power supply 140. The driving module 190 will be described in detail later.

The power supply 140 includes a battery electrically connected to the components 120, 130, 140, 150, 160, and 170 installed in the main body 110 and supplying driving power to the components 120, 130, 140, 150, 160, and 170.

The battery is a rechargeable, secondary battery, and electrically connects to a recharging base (not shown) through two recharging terminals (not shown) to receive power from the recharging base and perform recharging.

The traveling assembly 150 includes a pair of wheels 151 and 152 rotatably disposed in the left and right edges of the rear part of the main body 110 to move back and forth and rotate the main body 110, and a pair of wheel motors 153 and 154 for applying a driving force to the respective wheels 151 and 152. The pair of wheels 151 and 152 are positioned to be symmetrical to each other.

The cleaning tool assembly 160 is disposed in the front, lower part of the main body 110, and wipes off dust scattered on a floor below the main body 110 with water. The cleaning tool assembly 160 will be described in detail with reference to FIG. 4.

Referring to FIG. 4, the cleaning tool assembly 160 includes first and second jig members 161 and 162 disposed in the front, left and right sides of the frame 112 of the main body 110, and one or more pad members 163-1, 163-2, and 163-3 (see FIG. 2) positioned between the first and second jig members 161 and 162 and removably coupled to the first and second jig members 161 and 162. Each of the pad members 163-1, 163-2, and 163-3 is a rotatable drum-type pad member 163.

However, each of the pad members 163-1, 163-2, and 163-3 maybe a fixed-type pad member. If a plurality of pad members are provided, a foremost pad member of the pad members in the traveling direction of the robot cleaner 100 may be implemented as a drum-type pad member, and the remaining pad members may be implemented as fixed-type pad members.

The drum-type pad members 163-1, 163-2, and 163-3 may be implemented as one or more units, and in this embodiment, the robot cleaner 100 includes three drum-type pad members 163-1, 163-2, and 163-3.

The first jig member 161 includes a fixed member 161a fixed at a first side of the frame 112, and a separable member 161b removably coupled to the fixed member 161a.

Each of the fixed member 161a and the separable member 161b includes a plurality of grooves, and when the fixed member 161 is coupled to the separable member 161b, the grooves of the fixed member 161a and the separable member 161b form a plurality of first locking grooves ai, a2, and a3.

That is, the first jig member 161 includes a plurality of first locking grooves ai, a2, and a3, and first ends of the drum-type pad members 163-1, 163-2, and 163-3 are coupled to the first locking grooves ai, a2, and a3.

The separable member 161b is used to separate the drum-type pad members 163-1, 163-2, and 163-3 coupled between the first and second jig members 161 and 162 from the main body 110. When the separable member 161b is separated from the fixed member 161a, the first, second and third drum-type pad members 163-1, 163-2, and 163-3 are separated from the main body 110.

The second jig member 162 is fixed to a second side of the frame 112, which is opposite to the first side of the frame 112 to which the first jig member 161 is fixed.

The second jig member 162 includes a plurality of second locking grooves bi, b2, and b3, and gear members 164 (see FIG. 5A) are disposed in the plurality of second locking grooves b1, b2, and b3.

Second ends of the drum-type pad members 163-1, 163-2, and 163-3 are coupled to the second locking grooves b1, b2, and b3, and the drum-type pad members 163-1, 163-2, and 163-3 coupled to the second locking grooves b1, b2, and b3 rotate by driving forces of the gear members 164.

The drum-type pad members 163-1, 163-2, and 163-3 are coupled between the first and second jig members 161 and 162 in such a manner that protrusions of both ends of each of the drum-type pad members 163-1, 163-2, and 163-3 are inserted into and coupled to the corresponding ones of the first locking grooves a1, a2, and a3 and the second locking grooves b1, b2, and b3.

That is, the first drum-type pad member 163-1 is rotatably coupled between the first and second locking grooves a1 and b1, the second drum-type pad member 163-2 is rotatably coupled between the first and second locking grooves a2 and b2, and the third drum-type pad member 163-3 is rotatably coupled between the first and second locking grooves a3 and b3.

Each of the drum-type pad members 163-1, 163-2, and 163-3 includes a drum 163a, a pad 163b detachably attached on the external surface of the drum 163a and contacting a floor to wipe the floor, and protrusions 163c formed at both ends of the drum 163a to be protruded outward from both ends of the drum 163a, and respectively inserted into and coupled to the first locking groove of the first jig member 161 and the second locking groove of the second jig member 162.

The drum-type pad members 163-1, 163-2, and 163-3 are arranged in a line with respect to the traveling direction of the main body 110, and accordingly, the second and third drum-type pad members 163-2 and 163-3 sequentially travel about an area about which the first drum-type pad member 163-1 has traveled.

That is, the robot cleaner 100 may repeatedly clean an area using the drum-type pad members 163-1, 163-2, and 163-3.

The pad 163b may be detached from the drum 163a and replaced with another pad.

The pad 163b is protruded outward from the main body 110 in order to ensure a sufficient friction force with respect to a floor. The pad 163b is further protruded toward a floor than the two wheels 151 and 152.

Also, the drum-type pad members 163-1, 163-2, and 163-3 may rotate in a clockwise direction or in a counterclockwise direction.

Also, the drum-type pad members 163-1, 163-2, and 163-3 may connect to different gear members, respectively, and accordingly, the drum-type pad members 163-1, 163-2, and 163-3 may rotate in different rotation directions with different rotation speeds.

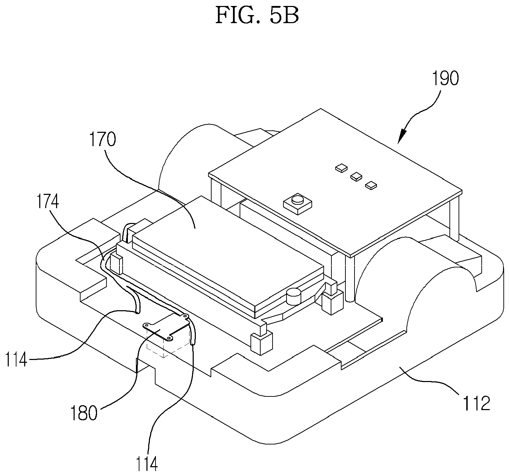

FIG. 5A is an exploded perspective view illustrating the main body 110 and the capacitance measurer 180 of the robot cleaner 100, according to an exemplary embodiment, and FIG. 5B is a perspective view illustrating a coupled state of the main body 110 and the capacitance measurer 180 of the robot cleaner 100, according to an exemplary embodiment.

As illustrated in FIGS. 5A and 5B, the cleaning tool assembly 160 (see FIG. 2) is disposed below the frame 112, whereas the water-feeding unit 170 is disposed above the frame 112. The water-feeding unit 170 adds water to at least one drum-type pad member of the first, second, and third drum-type pad members 163-1, 163-2, and 163-3 disposed below the frame 112.

For example, if the water-feeding unit 170 supplies water only to the first drum-type pad member 163-1, the first drum-type pad member 163-1 which is the foremost pad member in the traveling direction of the robot cleaner 100 has a wet pad in which the supplied water is absorbed, and the second and third drum-type pad members 163-2 and 163-3 have dry pads. Accordingly, the second and third drum-type pad members 163-2 and 163-3 wipe off water remaining on an area cleaned with water by the first drum-type pad member 163-1.

In this embodiment, it is assumed that the water-feeding unit 170 supplies water only to the first drum-type pad member 163-1.

FIG. 6 is a perspective view illustrating the water-feeding unit 170 of the robot cleaner 100, according to an exemplary embodiment.

Referring to FIG. 6, the water-feeding unit 170 supplies water to the first drum-type pad member 163-1.

The water-feeding unit 170 includes a water tank 171, a pump 172, and channel members 173 and 174.

The water tank 171 is mounted on the frame 112, stores water, and discharges water to the outside during cleaning.

The water tank 171 includes an inlet (not shown) for receiving water and an outlet (not shown) for discharging water to the outside during cleaning.

The pump 172 is positioned at one side of the water tank 171, pumps water stored in the water tank 171, and supplies the pumped water to the first drum-type pad member 163-1.

The pump 172 includes an inlet (not shown) for receiving water from the water tank 171, and an outlet (not shown) for supplying water to the first drum-type pad member 163-1 (see FIG. 4).

A first channel member 173 is connected between the outlet of the water tank 171 and the inlet of the pump 172, and the outlet of the pump 172 is connected to a second channel member 174.

That is, the pump 172 receives water from the water tank 171 through the first channel member 173, pumps the water, and supplies the pumped water to the first drum-type pad member 163-1 through the second channel member 174.

The second channel member 174 includes first and second channels 174a and 174b, and the first and second channels 174a and 174b are inserted into the water-feeding holes 114 (see FIG. 3B).

Also, the first and second channels 174a and 174b may extend to a pad of the cleaning tool assembly 160 (see FIG. 2) without installing the first and second spraying members 115 and 116 (see FIG. 3A).

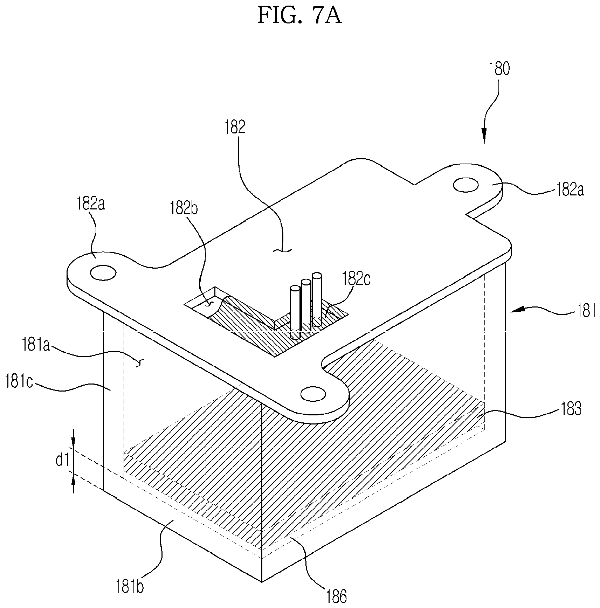

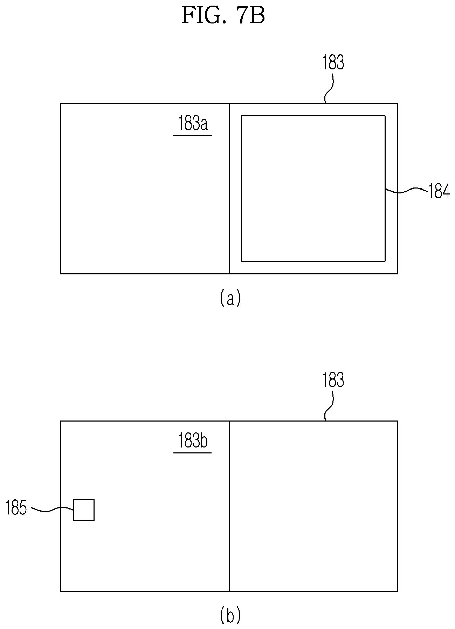

The water-feeding unit 170 may further include a water level measurer 175 (see FIG. 11) for measuring an amount of water stored in the water tank 171.
The capacitance measurer 180 (FIG. 7A) measures capacitance of the first drum-type pad member 163-1 in order to measure an amount of water of the first drum-type pad member 163-1. The capacitance measurer 180 will be described in detail with reference to FIGS. 7A and 7B, below.

FIG. 7A is a perspective view illustrating the capacitance measurer 180 installed in the robot cleaner 100, according to an exemplary embodiment, and FIG. 7B illustrates a PCB substrate 183 of the capacitance measurer 180 installed in the robot cleaner 100, according to an exemplary embodiment.

Referring to FIG. 7A, the capacitance measurer 180 includes a housing 181 having an opening and a container 181a, a cover 182 covering the opening of the housing 181, the PCB substrate 183 disposed in the container 181a of the housing 181, and a first sensor 184 disposed on the lower surface of the PCB substrate 183 to measure capacitance in order to measure an amount of water of the cleaning tool assembly 160 (see FIG. 2).

Hereinafter, the bottom of the housing 181 is referred to as a first side 181b, and the lateral sides of the housing 181 are referred to as second sides 181c, wherein the inner surface of the first side 181b contacts the PCB substrate 183 and the outer surface of the first side 181b contacts the cleaning tool assembly 160.

The cover 182 is disposed to contact the edges of the second sides 181c while facing the first side 181b, and thus covers the container 181a formed by the first side 181b and the second sides 181c.

The cover 182 includes at least one holding unit 182a extending outward to be hold on the frame 112 (see FIG. 5B), and the holding unit 182a has fixing holes and a wire hole 182b.

The wire hole 182b functions as a passage through which wires connected to the PCB substrate 183 are drawn to the outside of the housing 181. The wires are connected to the driving module 190.

A sealing material 182c is filled in the wire hole 182b of the cover 182.

The sealing material 182c may be silicon, and acts to prevent air or water from permeating the housing 181 after the wires are drawn out through the wire hole 182b.

That is, by sealing up the container 181a of the housing 181 with the cover 182 and the sealing material 182C, water from the pad 163b of the cleaning tool assembly 160 is prevented from arriving at the first sensor 184, a second sensor 185, and the PCB substrate 183, and the second sensor 185 is prevented from contacting any other medium except for air in the container 181a.

Thereby, capacitance values measured by the first and second sensors 184 and 185 are prevented from varying depending on the temperature or humidity of external air.

The size of the housing 181 corresponds to the size of the inserting hole 113 (see FIG. 5A), and the size of the cover 182 is larger than the size of the inserting hole 113. Accordingly, the first side 181b and the second sides 181c of the capacitance measurer 180 are inserted into the inserting hole 113 of the frame 112, and the cover 182 is hold on the frame 112.

The capacitance measurer 180 may further include the second sensor 185 for measuring capacitance of air in the container 181a, the air influenced by external environmental conditions, in order to determine a change of capacitance measured by the first sensor 184 according to external environmental conditions such as an external temperature or humidity.

As illustrated in FIG. 7B, the first and second sensors 184 and 185 are positioned on the PCB substrate 183 in such a manner that the first sensor 184 is disposed on the lower surface 183a of the PCB substrate 183 facing the first side 181b of the housing 181, and the second sensor 185 is disposed on the upper surface 183b of the housing 181 facing the cover 182 of the housing 181.

That is, the first and second sensors 184 and 185 are positioned on different sides of the PCB substrate 183, and measure capacitance values of different objects.

That is, the first sensor 184 disposed to contact the first side 181b of the housing 181 measures capacitance corresponding to an amount of water absorbed in the pad 163b of the cleaning tool assembly 160, and the second sensor 185 disposed to face the cover 182 of the housing 181 measures capacitance of air in the inner space of the container 181a of the housing 181, the capacitance of air corresponding to an environmental change such as a change in temperature, humidity, etc.

The environmental change in temperature, humidity, etc. in the container 181a of the housing 181 depends on external temperature, external humidity, etc.

The first sensor 184 is designed to be larger than the second sensor 185 in order for the first sensor 184 to sensitively measure capacitance with respect to water absorbed in the pad 163b of the cleaning tool assembly 160.

Therefore, the robot cleaner 100 (see FIG. 2) measures an amount of water absorbed in the pad 163b of the cleaning tool assembly 160, by compensating for a capacitance value measured by the first sensor 184 using a capacitance value measured by the second sensor 185 and changing according to changes in external temperature and external humidity, based on a characteristic that the capacitance values measured by the first and second sensors 184 and 185 change in the same manner according to an external environment.

The capacitance measurer 180 may further include a sealing member 186 disposed between the first side 181b of the housing 181 and the PCB substrate 183 in order to prevent an air gap from being formed between the first side 181b of the housing 181 and the PCB substrate 183.

The sealing member 186 fills up a thin air gap that may be formed between the first side 181b of the housing 181 and the PCB substrate 183, thereby preventing the first sensor 184 from contacting air.

The sealing member 186 may be adhesive such as a double-sided tape.

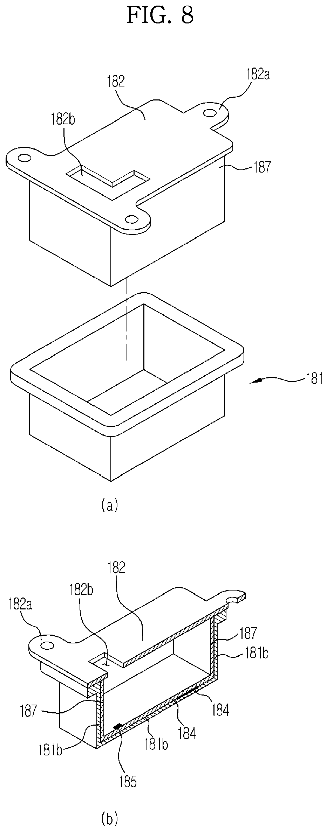

As another exemplary embodiment, the capacitance measurer 180 may further include a close-contacting member 187 for preventing an air gap from being formed between the first side 181b of the housing 181 and the PCB substrate 183. The capacitance measurer 180 including the close-contacting member 187 will be described in detail with reference to FIG. 8, below.

FIG. 8 is an exploded perspective view and a cross-sectional view illustrating a housing 181 and a cover 182 of a capacitance measurer 180 installed in the robot cleaner 100, according to an exemplary embodiment.

Referring to FIG. 8, the capacitance measurer 180 may include a housing 181 having an opening and a container 181, a cover 182 covering the opening of the housing 181, a PCB substrate 183 disposed in the container 181a of the housing 181, a first sensor 184 disposed on the PCB substrate 183 to measure capacitance in order to measure an amount of water of the cleaning tool assembly 160 (see FIG. 2), and a second sensor 185 for measuring capacitance of air in the inner space of the container 181a, the air influenced by external environmental conditions, in order to determine a change of capacitance measured by the first sensor 184 according to external environmental conditions such as an external temperature or humidity.

Likewise, the bottom of the housing 181 is referred to as a first side 181b, and the lateral sides of the housing 181 are referred to as second sides 181c, wherein the inner surface of the first side 181b contacts the PCB substrate 183 and the outer surface of the first side 181b contacts the cleaning tool assembly 160.

The cover 182 is disposed to contact the edges of the second sides 181c while facing the first side 181b, and covers the container 181a formed by the first side 181b and the second sides 181c.

The cover 182 includes at least one holding unit 182a extending outward to be hold on the frame 112 (see FIG. 5B), and the holding unit 182a has fixing holes and a wire hole 182b.
The capacitance measurer 180 further includes a close-contacting member 187 which is protruded from the lower surface of the cover 182, and the close-contacting member 187 is inserted into the container 181a of the housing 181 upon coupling with the housing 181. The close-contacting member 187 contacts the upper surface of the PCB substrate 182 to apply pressure to the upper surface of the PCB substrate 182, thereby causing the lower surface of the PCB substrate 182 to closely contact the first side 181b of the housing 181.

The close-contacting member 187 may be formed in a shape corresponding to the shape of the second sides 181c of the housing 181 so that the close-contacting member 187 contacts all the inner surfaces of the second sides 181c to apply pressure to all the edges of the PCB substrate 183, or the close-contacting member 187 may be formed in a bar shape so as to apply pressure to only a part of the PCB substrate 183.

The close-coupling member 187 may be made of an elastic material.

As such, by using the close-contacting member 187 to cause the first side 181b of the housing 181 to closely contact the PCB substrate 183, the first sensor 184 is prevented from contacting external air.

Also, by using the close- contacting member 187 to prevent an air gap from being formed between the first side 181b of the housing 181 and the PCB substrate 183, the first sensor 184 can sensitively measure capacitance of the cleaning tool assembly 160.

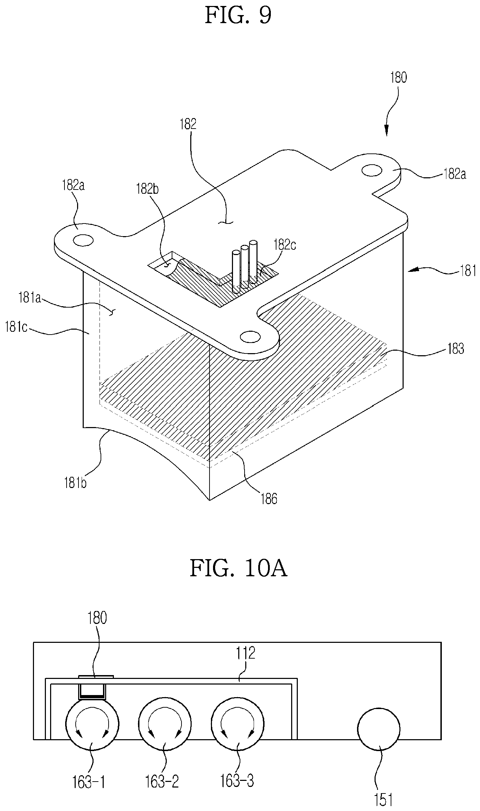

As another exemplary embodiment, the first side 181b of the capacitance measurer 180 may be formed in a shape corresponding to the shape of the pad 163b of the drum-type pad member 163-1 (see FIG. 4). The capacitance measurer 180 will be described in detail with reference to FIG. 9, below.

FIG. 9 is a perspective view illustrating a capacitance measurer 180 installed in the robot cleaner 100, according to an exemplary embodiment;
Referring to FIG. 9, the capacitance measurer 180 may include a housing 181 having an opening and a container 181, a cover 182 covering the opening of the housing 181, a
PCB substrate 183 disposed in the container 181a of the housing 181, and first and second sensors 184 and 185 disposed on the lower and upper surfaces of the PCB substrate 183.

Likewise, the bottom of the housing 181 is referred to as a first side 181b, and the lateral sides of the housing 181 are referred to as second sides 181c, wherein the inner surface of the first side 181b contacts the PCB substrate 183 and the outer surface of the first side 161b contacts the cleaning tool assembly 160.

The inner surface of the first side 181b has a flat shape corresponding to the flat shape of the PCB substrate 183, and the outer surface of the first side 181b has a curved shape corresponding to the shape of the drum-type pad member 163-1 of the cleaning tool assembly 160 (see FIG. 4).

That is, the outer surface of the first side 181b of the housing 181 has a curvature corresponding to that of the drum-type pad member 163-1.

Due to the curved structure of the first side 181b, when the drum-type pad member 163-1 rotates with the first side 181b buried in the pad 163b of the drum-type pad member 163-1, a load applied to the drum-type pad member 163-1 can be reduced.

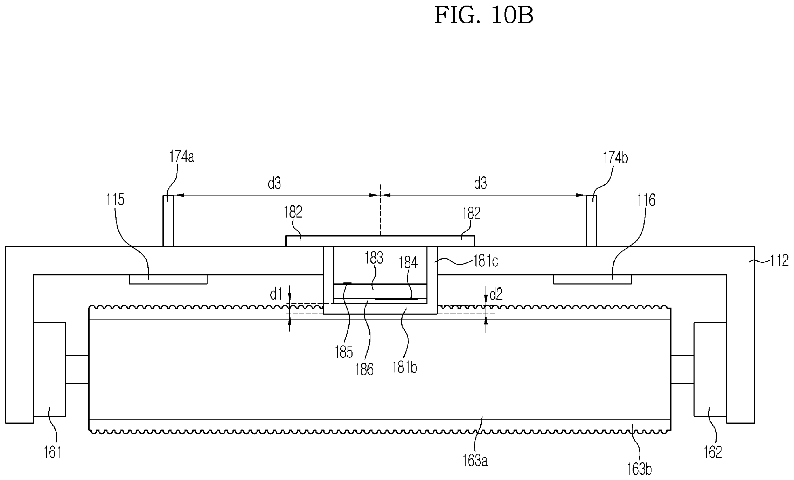

The capacitance measurer 180 will be described in more detail with reference to FIGS. 10A and 10B, below.

FIGS. 10A and 10B are cross-sectional views illustrating a state in which the capacitance measurer 180 has been installed in the robot cleaner 100, according to an exemplary embodiment.

Referring to FIGS. 10A and 10B, the housing 181 (see FIG. 9) of the capacitance measurer 180 is inserted into the inserting hole 113 (see FIG. 5A) of the frame 112 in the direction from top to bottom. Accordingly, the housing 181 of the capacitance measurer 180 is protruded from the frame 112 toward the cleaning tool assembly 160.

At this time, the cover 182 of the capacitance measurer 180 is hold on the frame 112, and the first side 181b of the housing 181 contacts the drum-type pad member 163-1 of the cleaning tool assembly 160.

Alternatively, the capacitance measurer 180 may be installed in the frame 112 through screw-coupling with the fixing holes of the setting unit 182a or through adhesive.

Referring to FIG. 10B, a first thickness d1 of the housing 181 of the capacitance measurer 180 has been decided in consideration of a change rate of a capacitance value with respect to an increased amount of water absorbed in the pad 163b of the cleaning tool assembly 160.

In more detail, when an amount of water absorbed in the pad 163b of the cleaning tool assembly 160 has increased by a predetermined amount, a change rate of a capacitance value measured by a capacitance measurer whose first side has a thickness of imm is greater than a change rate of a capacitance value measured by a capacitance measurer whose first side has a thickness of 2mm.

That is, when an amount of water absorbed in the pad 163b of the cleaning tool assembly 160 has increased by a predetermined amount, a change rate of a capacitance value measured by the first sensor 184 is greater as the thickness of the first side 181b of the housing 181 is thinner.

In other words, since a capacitance value measured by the first sensor 184 greatly changes in spite of a little change in an amount of water of the pad 163b when the first side 181b of the housing 181 has a thin thickness, the thin thickness of the first side 181b enables the first sensor 184 to accurately measure an amount of water absorbed in the pad 163b.

As such, by setting the first thickness d1 of the housing 181 in consideration of a change rate of capacitance with respect to a predetermined increased amount of water, it is possible to improve measurement accuracy for an amount of water of the cleaning tool assembly 160.

However, since there is limitation in reducing the thickness of the first side 181b of a capacitance measurer in view of a manufacturing process, the first side 181b is preferably set to a thickness ranging from about 0.5 mm to about 1.5 mm.

The first side 181b of the housing 181 contacts the PCB substrate 183.

The housing 181 of the capacitance measurer 180 protruded downward from the frame 112 is buried in the pad 163b of the cleaning tool assembly 160 by a second thickness d2 which is an overlapping thickness in order to improve measurement accuracy for an amount of water.

That is, the housing 181 of the capacitance measurer 180 is buried in the pad 163b of the cleaning tool assembly 160 by an overlapping thickness d2.

When an amount of water of the pad 163b of the cleaning tool assembly 160 has increased by a predetermined amount, a change rate of a capacitance value measured by the first sensor 184 is greater as an overlapping thickness d2 of the housing 181 and the pad 163b of the cleaning tool assembly 160 is thicker.

In other words, since a capacitance value measured by the first sensor 184 greatly changes in spite of the same change in an amount of water of the pad 163b as the overlapping thickness d2 of the housing 181 and the pad 163b is thicker, an appropriate overlapping thickness d2 enables the first sensor 184 to accurately measure an amount of water absorbed in the pad 163b.

The overlapping thickness d2 is set to an arbitrary thickness having no influence on rotation of the drum-type pad member 163-1 between a minimum overlapping thickness at which no air gap is formed between the pad 163b and the outer surface of the first side 181b and a maximum overlapping thickness corresponding to the thickness of the pad 163b.

That is, the overlapping thickness d2 may be appropriately set in consideration of a fact that a friction force between the housing 181 of the capacitance measurer 180 and the pad 163b increases in proportion to the overlapping thickness d2 of the housing 181 and the pad 163b to weaken a rotation force of the drum-type pad member 163-1.

As such, by setting an overlapping thickness d2 of the housing 181 of the capacitance measurer 180 and the pad 163b in consideration of a change rate of capacitance and a rotation speed of the drum-type pad member 163-1, it is possible to improve measurement accuracy for an amount of water of the cleaning tool assembly 160 while maintaining cleaning performance of the robot cleaner 100.

The capacitance measurer 180 is spaced by a third distance d3 from the first and second channels 174a and 174b of the channel member 174 for adding water to the pad 163b of the cleaning tool assembly 160.

The third distance d3 may be about 20 mm at which whether or not the pad 163b has been attached on the drum 163a (see FIG. 4) can be determined.

A capacitance value measured by the first sensor 184 when no pad is attached on the drum 163a is more or less the same as a capacitance value measured by the first sensor 184 when the pad 163b attached on the drum 163a is in a dry state.

Accordingly, in order to distinguish the case in which no pad is attached on the drum 163a from the case in which the pad 163b attached on the drum 163a is in a dry state, a distance for water-spreading is set such that different capacitance values are measured by the first sensor 184 when a small amount of water is supplied to the pad 163b.

Also, by arranging the first and second channels 174a and 174b to be symmetrical to each other with the capacitance measurer 180 in between, it is possible to supply a constant amount of water to the entire surface of the pad 163d of the cleaning tool assembly 160.

The first thickness di of the first side 181b of the housing 181, the overlapping thickness d2 of the housing 181 and the pad 163b, and the third distance d3 between the housing 181 and each channel 174a or 174b may be set to optimal values for accurately measuring an amount of water of the pad 163b based on capacitance, through a predetermined test.

The robot cleaner 100 may further include a pad detector (not shown) for determining whether a pad has been attached on the cleaning tool assembly 160. The pad detector may be implemented as an optical sensor or a micro switch that is disposed adjacent to the cleaning tool assembly 160.

FIG. 11 is a block diagram illustrating a configuration for controlling the robot cleaner 100, according to an exemplary embodiment. Referring to FIG. 11, the robot cleaner 100 includes a user interface 120, an obstacle detector 130, a water level measurer 175, a capacitance measurer 180, and a driving module 190.

In more detail, the user interface 120 includes an input unit 121 for receiving schedule information, a cleaning start/end command, a driving mode, etc. and a display unit 122 for displaying schedule information, a battery level, a water level of a water tank, an amount of water of a pad, etc.

The driving mode includes a cleaning mode, a standby mode, a docking mode, etc.
The obstacle detectors 130 detects an obstacle existing in an area to be cleaned, and transmits an obstacle detection signal to a controller 191.

The obstacle detection signal output from the obstacle detector 130 may include a distance detection signal representing a distance to the obstacle.

The water level measurer 175 measures a level of water stored in the water tank 171 (see FIG. 6), and transfers information regarding the measured level of water to the controller 191. Also, the water level measurer 175 may measure an amount of water stored in the water tank 171.

The capacitance measurer 180 measures capacitance of the pad 163b of the cleaning tool assembly 160 (see FIG. 4), and transfers information regarding the measured capacitance to the controller 191 in order to measure an amount of water absorbed in the pad 163b of the cleaning tool assembly 160.

The capacitance measurer 180 may also measure capacitance of air in the inner space of the housing 181.

The capacitance measurer 180 may include a first sensor 184 for measuring capacitance of the pad 163b, and a second sensor 185 for measuring capacitance of air in the inner space of the housing 181 (see FIG. 8).

The first sensor 184 measures capacitance of the pad 163b based on a change in voltage, frequency, etc. of an alternating current signal, which changes depending on the state of the pad 163b and an amount of water of the pad 163b.

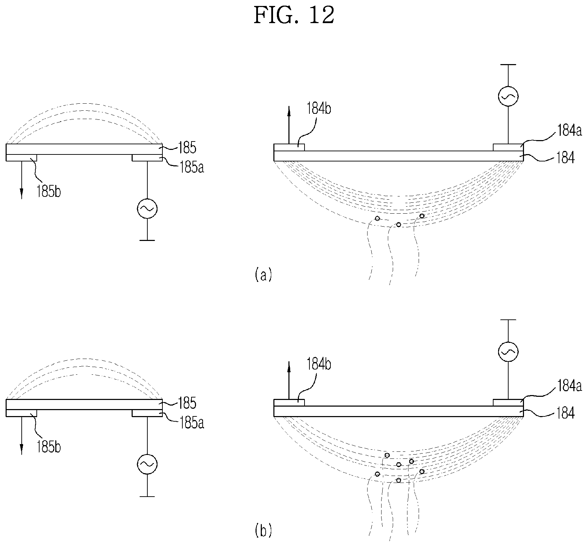

The second sensor 185 measures capacitance of air in the inner space of the housing 181 based on a change in voltage, frequency, etc. of an alternating current signal which changes depending on environmental conditions, such as temperature and humidity. Hereinafter, a principle of measuring an amount of water absorbed in a pad based on capacitance will be described with reference to FIG. 12.

FIG. 12 illustrates a method in which the capacitance measurer 180 installed in the robot cleaner 100 measures capacitance, according to an exemplary embodiment.
The first sensor 184 includes a film on which charges are formed, a first electrode 184a which is disposed on the lower surface of the film and to which an alternating current voltage is applied, and a second electrode 184b which is disposed on the lower surface of the film and which detects a change of charges according to a change of an electric field formed on the film.

The change of charges on the film of the first sensor 184 changes a voltage or frequency.

This will be described as an example, below.

If a human hand contacts the film of the first sensor 184, charges formed on the film move through the human hand so that an alternating current frequency of the film is lowered than before the human hand contacts the film. That is, the human hand acts as a capacitor.

As such, the film of the first sensor 184 functions as a capacitor, and at this time, a small amount of charges moves to the surface of the pad 163b.

However, if the film of the first sensor 184 contacts the pad 163b, charges of the film move to the pad 163b to lower the frequency of the alternating current signal so that a capacitance value changes.

The more amount of water absorbed in the pad 163b, the more charges formed on the film move to the surface of the pad 163b. Accordingly, the frequency of an alternating current signal detected from the surface of the film is significantly lowered to increase a change of a capacitance value.

The second sensor 185 includes a film on which charges are formed, a first electrode 185a which is disposed on the film and to which an alternating current voltage is applied, and a second electrode 185b which is disposed on the film and which detects a change of charges according to a change of an electric field formed on the lower surface of the film

The change of charges on the film of the second sensor 185 changes a voltage or frequency.

Also, charges formed on the surface of the second sensor 185 vary depending on the temperature and humidity of air in the inner space of the container 181a of the housing 181 (see FIG. 9).

The driving module 190 (see FIG. 11) drives loads, such as the pump 172 (see FIG. 6), the wheel motors 153 and 154 (see FIG. 2), and the gear member 164 (see FIG. 5A), based on signals transmitted from the user interface 120 (see FIG. 11), the obstacle detector 130, the water level measurer 175, and the capacitance measurer 180 (see FIG. 11).

The driving module 190 includes a controller 191, a storage unit 192, and a plurality of drivers 193, 194, and 195 (see FIG. 11).

The controller 191 controls collision-avoidance traveling based on an obstacle detection signal detected by the obstacle detector 130.

The controller 191 compares a water level of the water tank 171 (see FIG. 6), measured by the water level measurer 175, to a reference water level, and controls driving of the display unit 122 to display information indicating a lack of water on the display unit 122, if the measured water level of the water tank 171 is lower than the reference water level.

If a cleaning command is received, the controller 191 determines whether a pad has been attached on the cleaning tool assembly 160 (see FIG. 2). If no pad has been attached on a drum, the controller 191 controls driving of the display unit 122 to display information notifying that no pad is attached on a drum on the display unit 122, and if a pad has been attached on the drum, the controller 191 controls driving of the wheel motors 153 and 154 and the gear member 164 so that the robot cleaner 100 travels and cleans.

The controller 191 measures an amount of water of the pad 163b of the cleaning tool assembly 160 based on capacitance measured by the capacitance measurer 180 during traveling and cleaning, compares the measured amount of water to a first reference amount of water, controls the pump 172 to add water to the pad 163 if the measured amount of water is less than the first reference amount of water, and continues to clean if the measured amount of water is more than the first reference amount of water.
The first reference amount of water is an amount of water corresponding to a driving mode set through the input unit 121 of the user interface 120, and is an amount of water for optimally performing the driving mode.

If an amount of water of the pad 163b is less than a second reference amount of water when a water level of the water tank 171 is lower than a reference water level, the controller 191 stops driving the wheel motors 153 and 154 and the gear member 164 to thus stop cleaning and traveling, and if the measured amount of water is more than the second reference amount of water, the controller 191 continues to clean.

Also, the controller 191 compensates for capacitance measured by the first sensor 184 based on capacitance measured by the second sensor 185 when measuring an amount of water, and measures an amount of water of the pad 163b based on the compensated capacitance.

The controller 191 controls water supply at regular time intervals such that the pad 163b is maintained with the first reference amount of water corresponding to a driving mode during traveling and cleaning, and controls driving of the gear member 164 such that the drum-type pad member 163-1 (see FIG. 2) rotates at a predetermined rotation speed.

If it is determined that cleaning has been completed, the controller 191 controls drying of the cleaning tool assembly 160 and docking with a recharging base.

In order to dry the cleaning tool assembly 160, the controller 191 may control driving of the gear member 164 in order for the drum 163a to rotate for a predetermined time period, thereby drying the pad 163b through friction of the pad 163b against a floor surface.

As another example, the controller 191 may control rotation of the wheel motors 153 and 154 in order for the main body 110 (see FIG. 1) to move back and forth for a predetermined time period, thereby drying the pad 163b through back-and-forth traveling.

As still another example, the controller 191 may control driving of the wheel motors 153 and 154 such that the main body 110 moves to a support of the recharging base and the frame of the main body 110 is held in the support, thereby drying the pad 163b with natural wind.

The storage unit 192 stores information regarding an amount of water of the pad 163b corresponding to the capacitance measured by the first sensor 184, and also stores a compensated value of the capacitance measured by the first sensor 184, corresponding to the capacitance measured by the second sensor 185.

The storage unit 192 stores information regarding the first reference amount of water for optimal cleaning and the second reference amount of water for determining a lack of water of the pad 163b, and also stores information regarding the reference water level for determining a lack of water of the water tank 171. The first reference amount of water may be set according to a driving mode selected by a user.

Also, the storage unit 192 stores information regarding an optimal amount of water for each driving mode, and information regarding a rotation speed of the drum 163a and a water adding period for an amount of water of the pad 163b.

The first driving unit 193 (see FIG. 11) drives the pump 172 (see FIG. 6) according to a command from the controller 191 to supply water stored in the water tank 171 to the pad 163b.

The second driver 194 (see FIG. 11) drives the wheel motors 153 and 154 according to a command from the controller 191 to move the main body 110 forward or backward or to rotate the main body 110.

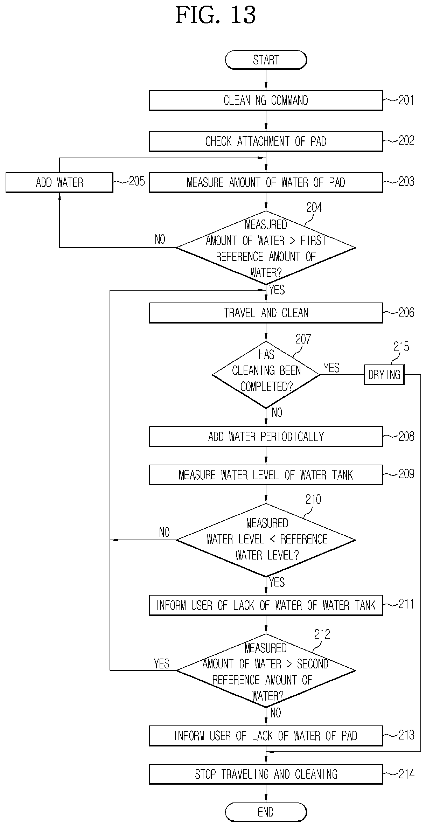

The third driver 195 (see FIG. 11) drives the gear member 164 according to a command from the controller 191 to rotate the drum-type pad members 163-1, 163-2, and 163-3. FIG. 13 is a flowchart illustrating a method of controlling the robot cleaner 100, according to an exemplary embodiment.

When a cleaning command is received through the input unit 121 (see FIG. 11) or when the system clock reaches a scheduled time (201), the robot cleaner 100 determines whether a pad has been attached on the cleaning tool assembly 160 (202).

At this time, the robot cleaner 100 first measures capacitance using the first sensor 184 (see FIG. 8) of the capacitance measurer 180 (see FIG. 7A), drives the pump 172 (see FIG. 11) to supply a predetermined amount of water to the cleaning tool assembly 160 through the first and second channels 174a and 174b (FIG. 3B), secondarily measures capacitance using the first sensor 184 after the predetermined amount of water has been supplied, and compares the first measured capacitance to the secondarily measured capacitance to determine whether the secondarily measured capacitance is different from the first measured capacitance, thereby determining whether a pad has been attached on the cleaning tool assembly 160.

That is, the robot cleaner 100 determines whether a capacitance value of the cleaning tool assembly 160 increases as an amount of water absorbed in the pad 163b of the cleaning tool assembly 160 increases, thereby determining whether a pad has been attached on the cleaning tool assembly 160.

If the secondarily measured capacitance is the same as the first measured capacitance, the robot cleaner 100 determines that the supplied water has been discharged to the outside to thus determine whether no pad is attached on the cleaning tool assembly 160, and outputs information indicating that no pad is attached on the cleaning tool assembly 160 on the display unit 122 (see FIG. 11) to inform a user. Alternatively, the robot cleaner 100 may inform a user of information indicating that no pad is attached on the cleaning tool assembly 160 through sound.

If it is determined that a pad has been attached on the cleaning tool assembly 160, the robot cleaner 100 measures an amount of water absorbed in the pad 163b based on the secondarily measured capacitance value.

The robot cleaner 100 may measure capacitance of the pad 163b while rotating the drum-type pad member 163-1. For example, the robot cleaner 100 may measure capacitance of at least one part of the pad 163b attached on the circumference surface of the drum 163a while rotating the drum 163a at a speed of 3rpm, thereby determining an amount of water of the pad 163b.

The robot cleaner 100 may measure an amount of water of the pad 163b based on capacitance measured by the capacitance measurer 180 (203), and compares the measured amount of water to a first reference amount of water (for example, 30g) (204).

If the measured amount of water is less than the first reference amount of water, the robot cleaner 100 controls the pump 172 to add water to the pad 163b (205), and if the measured amount of water is more than the first reference amount of water, the robot cleaner 100 performs traveling and cleaning.

The robot cleaner 100 may add water to the pad 163b for a predetermined time period every first water-adding time period. When adding water to the pad 163b, the robot cleaner 100 may rotate the drum-type pad member 163-1 at a first rotation speed.

Whenever adding water to the pad 163b every first water-adding time period, the robot cleaner 100 measures capacitance of the pad 163b if the predetermined time period has elapsed, calculates an amount of water corresponding to the measured capacitance, compares the calculated amount of water to a first reference amount of water to determine whether an amount of water absorbed in the pad 163b is equal to the first reference amount of water, thereby determining whether to stop adding water.

If it is determined that adding water has been completed, that is, if it is determined that an amount of water absorbed in the pad 163b is equal to the first reference amount of water, the robot cleaner 100 travels and cleans (206).

The first reference amount of water is an amount of water corresponding to a driving mode selected through the input unit 121 of the user interface 120, and is an amount of water for optimally performing the driving mode.

Then, the robot cleaner 100 travels and cleans a floor while controlling driving of the wheel motors 153 and 154 and the gear member 164, detects an obstacle, e.g., furniture, office supplies, walls, etc. existing on the floor and determines a distance to the obstacle based on an obstacle detection signal detected by the obstacle detector 130 (see FIG. 11), drives the wheels 151 and 152 (see FIG. 2) based on the distance to the obstacle to clean the floor with water while autonomously changing a traveling direction.

Then, the robot cleaner 100 determine whether cleaning has been completed during traveling and cleaning (207), and if cleaning has not yet been completed, the robot cleaner 100 continues to travel about and clean the floor adds water periodically (208).

During traveling and cleaning, the robot cleaner 100 adds water to the pad 163b every second water-adding time period (for example) to adjust an amount of water absorbed in the pad 163b to the first reference amount of water, and wipes the floor through friction with the floor while rotating the drum-type pad member 163-1 at a second rotation speed.

The second water-adding time period is longer than the first water-adding time period, and the second rotation speed is lower than the first rotation speed.

The reason why the second water-adding time period is set to be longer than the first water-adding time period and the second rotation speed is set to be lower than the first rotation speed is to make the pad 163b quickly absorb water.

Also, the second water-adding time period and the second rotation speed vary depending on the first reference amount of water. That is, as the first reference amount of water increases, the second water-adding time period becomes longer and the second rotation speed becomes higher.

The first drum-type pad member 163-1 wipes the floor with the pad 163b having a predetermined amount of water, and the second and third drum-type pad members 163-2 and 163-3 wipe the floor with dry pads. Accordingly, the second and third drum-type pad members 163-2 and 163-3 wipe off water remaining on the floor when the first drum-type pad member 163-1 has passed through the floor.

That is, the robot cleaner 100 wipes off foreign substances such as dust scattered on an area to be cleaned with water while autonomously traveling about the area.

In addition, a drum rotation speed and a time period at which water is added to the pad 163b may be adjusted according to an amount of water of the pad 163b.

For example, if an amount of water of the pad 163b is less than the first reference amount of water, that is, if there is a lack of water of the pad 163b, the robot cleaner 100 adds water to the pad 163b for about 10 minutes at time intervals of about 15 seconds while rotating the drum 163a at a rotation speed of 3rpm, thereby uniformly and quickly adding water to the pad 163b.

Thereafter, if an amount of water of the pad 163b becomes equal to or more than the first reference amount of water, the robot cleaner 100 may lower the rotation speed of the drum 163a and lengthen a water-adding time period. For example, if about 10 minutes has elapsed from when the drum 163a has first rotated, the robot cleaner 100 may adjust the rotation speed of the drum 163a to o.oirpm, and add water to the pad 163b every 60 seconds while slowly rotating the drum 163a.

Also, if it is determined that an amount of water of the pad 163b is equal to the first reference amount of water, the robot cleaner 100 may adjust the rotation speed of the drum 163a to o.oirpm, and add water to the pad 163a every 60 seconds so as to slowly supply water to the pad 163b as long as the pad 163b is not dried.

Also, the robot cleaner 100 may perform cleaning while controlling a rotation speed of the drum 163a and a water-adding time period after once measuring an amount of water of the pad 163b, or may measure an amount of water of the pad 163b periodically or in real time during traveling, and automatically change a water-adding time period and a rotation speed of the drum 163a if the measured amount of water of the pad 163b is less than the first reference amount of water.

Also, the robot cleaner 100 measures a water level of the water tank 171 using the water level measurer 175 (see FIG. 11) during traveling and cleaning (209), compares the measured water level of the water tank 171 to a reference water level (210), and displays information representing a lack of water of the water tank 171 through the display unit 122 (see FIG. 11) if the measured water level of the water tank 171 is lower than the reference water level, thereby informing a user of a lack of water of the water tank 171 (211).

If the measured water level is higher than the reference water level, the robot cleaner 100 continues to travel and clean.

Also, when the water level of the water tank 171 is lower than the reference water level, the robot cleaner 100 calculates an amount of water corresponding to capacitance measured by the capacitance measurer 180, and compares the calculated amount of water to a second reference amount of water (212). If the calculated amount of water is more than the second reference amount of water, the robot cleaner 100 continues to travel and clean, and if the calculated amount of water is less than the second reference amount of water, the robot cleaner 100 displays information representing a lack of water of the pad 163b through the display unit 122 to thereby inform a user of a lack of water of the pad 163b (213), and stops driving the wheel motors 153 and 154 and the gear member 164 to stop traveling and cleaning (214).

Also, when calculating an amount of water of the pad 163b, the robot cleaner 100 may compensate for capacitance measured by the first sensor 184 using capacitance measured by the second sensor 185, and calculate an amount of water of the pad 163b based on the compensated capacitance.

If it is determined that cleaning has been completed, the robot cleaner 100 controls drying of the cleaning tool assembly 160 and docking with a recharging base.
In order to dry the cleaning tool assembly 160, the controller 191 may control driving of the gear member 164 in order for the drum 163a to rotate for a predetermined time period, thereby drying the pad 163b through friction of the pad 163b against a floor surface.

As another example, the controller 191 may control rotation of the wheel motors 153 and 154 in order for the main body 110 (see FIG. 1) to move back and forth for a predetermined time period, thereby drying the pad 163b through back-and-forth traveling.

As still another example, the controller 191 may control driving of the wheel motors 153 and 154 such that the main body 110 moves to a support (not shown) of a recharging base (not shown) and the frame of the main body no is held in the support, thereby drying the pad 163b with natural wind.

In this way, by drying the pad 163b until an amount of water of the pad 163b is less than a predetermined amount of water, it is possible to prevent the pad 163b from having a bad smell.

Also, the robot cleaner 100 docks with the recharging base if cleaning has been completed or if a battery level is lower than a reference level, and if docking has been completed, the robot cleaner 100 receives power from the recharging base to be charged.

Also, since the robot cleaner 100 includes the water tank 171 capable of continuing to supply water to the pad 163b during cleaning, efficiency of wet cleaning can be further improved.

Although a few embodiments have been shown and described, it would be appreciated by those skilled in the art that changes may be made in these embodiments without departing from the principles of the invention, the scope of which is defined in the claims.

## Claims

1. A robot cleaner (100) comprising:
a main body (no);
a travelling assembly (150) for moving the main body (110);
a cleaning tool assembly (160) comprising a pad (163b) which is installed in the lower part of the main body (110), and which is arranged to contact a floor to clean the floor; and
a water-feeder (170) to supply water to the pad (163b),
**characterised by** a capacitance measurer (180) to measure capacitance of the pad (163b) in order to calculate an amount of water absorbed in the pad (163b).

2. The robot cleaner according to claim 1, wherein the capacitance measurer (180) comprises:
a housing (181) having a first side (181b) whose outer surface contacts the cleaning tool assembly (160), second sides (181c) extending from the edges of the first side (181b), and a container (181a) formed by the first side (181b) and the second sides (181c);
a cover (182) to cover the housing (181);
a Printed Circuit Board (PCB) substrate (183) disposed in the container (181a) of the housing (181) to be adjacent to an inner surface of the first side (181b) of the housing (181); and
a first sensor (184) disposed on a first surface of the PCB substrate (183) to be adjacent to the inner surface of the first side (181b) of the housing (181), the first sensor (184) measuring capacitance of the cleaning tool assembly (160).

3. The robot cleaner according to claim 2, wherein the capacitance measurer (180) further comprises a second sensor (185) disposed on a second surface of the PCB substrate (183), the second surface being opposite to the first surface of the PCB substrate (183) on which the first sensor (184) is disposed, the second sensor (185) measuring capacitance of the inner space of the container (181a) of the housing (181).

4. The robot cleaner according to claim 2 or 3, wherein the capacitance measurer (180) further comprises a sealing member (186) disposed between the first side (181c) of the housing (181) and the PCB substrate (183) to prevent an air gap from being formed between the first side (181b) of the housing (181) and the PCB substrate (183), thereby preventing the first sensor (184) from contacting air.

5. The robot cleaner according to claim 2, 3 or 4, wherein the first side (181b) of the housing (181) of the capacitance measurer (180) has a thickness ranging from about 0.5 mm to about 1.5 mm.

6. The robot cleaner according to any one of claims 2 to 5, wherein the housing (181) of the capacitance measurer (180) protrudes from the main body (110) toward the cleaning tool assembly (160).

7. The robot cleaner according to any one of claims 2 to 6, wherein the capacitance measurer (160) further comprises a close-contacting member (187) which is disposed between the cover (182) and the PCB substrate (183), and which applies pressure to the PCB substrate (183) so as for the PCB substrate (183) to closely contact the first side (181b) of the housing (181).

8. The robot cleaner according to any one of the preceding claims, wherein:
the cleaning tool assembly (160) further comprises:
a drum (163a) rotatably coupled to the main body (110);
and
a gear member (164) which is connected to an end of the drum (163a), and which rotates the drum (163a),
wherein the pad (163b) is attached on an outer surface of the drum (163a) for contacting a floor; and
the capacitance measurer (180) is buried in the pad (163b) of the cleaning tool assembly (160) by a predetermined overlapping thickness.

9. The robot cleaner according to claim 8, wherein the pad (163b) attached on the outer surface of the drum (163a) has a predetermined curvature, and
the first side of the housing (181) of the capacitance measurer (180) has a curvature corresponding to the predetermined curvature of the pad (163b).

10. The robot cleaner according to any one of the preceding claims, wherein the water-feeder (170) comprises:
a water tank (171) which is removably coupled to the main body (110), and which stores water;
a pump (172) which is connected to the water tank (171), and which pumps water stored in the water tank (171); and
a channel member (173, 174) which is connected to the pump (172), and which guides the pumped water to the cleaning tool assembly (160).

11. The robot cleaner according to claim 10, wherein:
the channel member (173,174) comprises a first channel (174a) and a second channel (174b) which divides water pumped by the pump (172) and which guides the pumped water to the cleaning tool assembly (160), and
the main body (110) comprises an inserting hole (113) into which the capacitance measurer (180) is inserted and installed, and a plurality of water-feeding holes (114) spaced by a predetermined distance from the inserting hole (113), wherein the first (174a) and second (174b) channels are inserted into the plurality of water-feeding holes (114).

12. The robot cleaner according to claim 11, wherein the capacitance measurer (180) is detachable from the main body (110).

13. The robot cleaner according to claim 10, 11 or 12, further comprising:
a water-feeding hole (114) into which the channel member (173, 174) is inserted and connected; and
a spraying member (115, 116) which is connected to the water-feeding hole (114), and which sprays water supplied from the water-feeding hole (114) to the cleaning tool assembly (160).

14. The robot cleaner according to claim 13, wherein the capacitance measurer (180) is further protruded toward the floor than the spraying member (115, 116).

15. A control method of a cleaning robot, the cleaning robot including a main body (110), a travelling assembly (150) which travels about a floor while moving the main body (110), a cleaning tool assembly (160) comprising a pad (163b) which is rotatably coupled to the main body (110) and which cleans the floor with water, and a water-feeder (170) to supply water to the pad (163b),
**characterised by** the control method comprising:
if a cleaning command (201) is received, measuring capacitance of the pad (163b) using a capacitance measurer (180);
calculating an amount of water absorbed in the pad (163b) based on the measured capacitance; and
controlling traveling and cleaning of the cleaning tool assembly (160) based on the calculated amount of water.

## Patentansprüche

1. Reinigungsroboter (100), umfassend:
einen Hauptkörper (110);
eine Fahrbaugruppe (150) zum Bewegen des Hauptkörpers (110);
eine Reinigungswerkzeugbaugruppe (160), umfassend ein Kissen (163b), das in dem unteren Teil des Hauptkörpers (110) installiert ist und eingerichtet ist, um einen Boden zum Reinigen des Bodens zu berühren; und
einen Wasserspeiser (170) zum Zuführen von Wasser an das Kissen (163b),
**gekennzeichnet durch** einen Kapazitätsmesser (180) zum Messen der Kapazität des Kissens (163b), um eine in dem Kissen (163b) absorbierte Wassermenge zu berechnen.

2. Reinigungsroboter gemäß Anspruch 1, wobei der Kapazitätsmesser (180) Folgendes umfasst:
ein Gehäuse (181), das eine erste Seite (181b), deren äußere Oberfläche die Reinigungswerkzeugbaugruppe (160) berührt, zweite Seiten (181c), die sich von den Kanten der ersten Seite (181b) erstrecken, und einen Behälter (181a), der durch die erste Seite (181b) und die zweiten Seiten (181c) ausgebildet wird, aufweist;
eine Abdeckung (182) zum Abdecken des Gehäuses (181);
ein Leiterplattensubstrat (PCB-Substrat, PCB = Printed Circuit Board, 183), das in dem Behälter (181a) des Gehäuses (181) so angeordnet ist, dass es an eine innere Oberfläche der ersten Seite (181b) des Gehäuses (181) angrenzt; und
einen ersten Sensor (184), der auf einer ersten Oberfläche des PCB-Substrats (183) so angeordnet ist, dass er an die innere Oberfläche der ersten Seite (181b) des Gehäuses (181) angrenzt, wobei der erste Sensor (184) die Kapazität der Reinigungswerkzeugbaugruppe (160) misst.

3. Reinigungsroboter gemäß Anspruch 2, wobei der Kapazitätsmesser (180) ferner einen zweiten Sensor (185) umfasst, der auf einer zweiten Oberfläche des PCB-Substrats (183) angeordnet ist, wobei die zweite Oberfläche der ersten Oberfläche des PCB-Substrats (183), auf der der erste Sensor (184) angeordnet ist, gegenüberliegt, wobei der zweite Sensor (185) die Kapazität des inneren Raums des Behälters (181a) des Gehäuses (181) misst.

4. Reinigungsroboter gemäß Anspruch 2 oder 3, wobei der Kapazitätsmesser (180) ferner ein Dichtungsglied (186) umfasst, das zwischen der ersten Seite (181c) des Gehäuses (181) und dem PCB-Substrat (183) angeordnet ist, um zu verhindern, dass ein Luftspalt zwischen der ersten Seite (181b) des Gehäuses (181) und dem PCB-Substrat (183) ausgebildet wird, wodurch verhindert wird, dass der erste Sensor (184) Luft berührt.

5. Reinigungsroboter gemäß Anspruch 2, 3 oder 4, wobei die erste Seite (181b) des Gehäuses (181) des Kapazitätsmessers (180) eine Dicke aufweist, die in einem Bereich von etwa 0,5 mm bis etwa 1,5 mm liegt.

6. Reinigungsroboter gemäß einem der Ansprüche 2 bis 5, wobei das Gehäuse (181) des Kapazitätsmessers (180) aus dem Hauptkörper (110) zur Reinigungswerkzeugbaugruppe (160) hin vorsteht.

7. Reinigungsroboter gemäß einem der Ansprüche 2 bis 6, wobei der Kapazitätsmesser (160) ferner ein eng berührendes Glied (187) umfasst, das zwischen der Abdeckung (182) und dem PCB-Substrat (183) angeordnet ist und das Druck auf das PCB-Substrat (183) ausübt, sodass das PCB-Substrat (183) die erste Seite (181b) des Gehäuses (181) eng berührt.

8. Reinigungsrobotor gemäß einem der vorhergehenden Ansprüche, wobei:
die Reinigungswerkzeugbaugruppe (160) ferner Folgendes umfasst:
eine Trommel (163a), die mit dem Hauptkörper (110) drehbar gekoppelt ist;
und
ein Zahnradglied (164), das mit einem Ende der Trommel (163a), verbunden ist und das die Trommel (163a) dreht,
wobei das Kissen (163b) an einer äußeren Oberfläche der Trommel (163a) zum Berühren eines Bodens angebracht ist; und
der Kapazitätsmesser (180) in dem Kissen (163b) der Reinigungswerkzeugbaugruppe (160) mit einer vorab festgelegten überlappenden Dicke vergraben ist.

9. Reinigungsroboter gemäß Anspruch 8, wobei das Kissen (163b), das auf der äußeren Oberfläche der Trommel (163a) angebracht ist, eine vorab festgelegte Krümmung aufweist, und
die erste Seite des Gehäuses (181) des Kapazitätsmessers (180) eine Krümmung aufweist, die der vorab festgelegten Krümmung des Kissens (163b) entspricht.

10. Reinigungsroboter gemäß einem der vorhergehenden Ansprüche, wobei der Wasserspeiser (170) Folgendes umfasst:
einen Wassertank (171), der mit dem Hauptkörper (110) entfernbar gekoppelt ist und der Wasser speichert;
eine Pumpe (172), die mit dem Wassertank (171), verbunden ist und die in dem Wassertank (171) gespeichertes Wasser pumpt; und
ein Kanalglied (173, 174), das mit der Pumpe (172) verbunden ist und das das gepumpte Wasser an die Reinigungswerkzeugbaugruppe (160) führt.

11. Reinigungsrobotor gemäß Anspruch 10, wobei:
das Kanalglied (173, 174) einen ersten Kanal (174a) und einen zweiten Kanal (174b), der durch die Pumpe (172) gepumptes Wasser teilt und der das gepumpte Wasser an die Reinigungswerkzeugbaugruppe (160) führt, umfasst, und
der Hauptkörper (110) ein Einführungsloch (113), in das der Kapazitätsmesser (180) eingeführt und in dem dieser installiert ist, und eine Vielzahl von Wasserspeiselöchern (114), die um einen vorab festgelegten Abstand von dem Einführungsloch (113) beabstandet sind, umfasst, wobei der erste (174a) und zweite (174b) Kanal in der Vielzahl von Wasserspeiselöchern (114) eingeführt sind.

12. Reinigungsroboter gemäß Anspruch 11, wobei der Kapazitätsmesser (180) von dem Hauptkörper (110) abnehmbar ist.

13. Reinigungsrobotor gemäß Anspruch 10, 11 oder 12, ferner umfassend:
ein Wasserspeiseloch (114), in das das Kanalglied (173, 174) eingeführt und mit dem dieses verbunden ist; und
ein Sprühglied (115, 116), das mit dem Wasserspeiseloch (114) verbunden ist und das von dem Wasserspeiseloch (114) zugeführtes Wasser auf die Reinigungswerkzeugbaugruppe (160) sprüht.

14. Reinigungsroboter gemäß Anspruch 13, wobei der Kapazitätsmesser (180) zu dem Boden hin weiter vorsteht als das Sprühglied (115, 116).

15. Steuerungsverfahren eines Reinigungsroboters, wobei der Reinigungsroboter Folgendes beinhaltet:
einen Hauptkörper (110), eine Fahrbaugruppe (150), die auf einem Boden fährt, während sie den Hauptkörper (110) bewegt, eine Reinigungswerkzeugbaugruppe (160), umfassend ein Kissen (163b), das mit dem Hauptkörper (110) drehbar gekoppelt ist und das den Boden mit Wasser reinigt, und einen Wasserspeiser (170) zum Zuführen von Wasser an das Kissen (163b), **dadurch gekennzeichnet, dass** das Steuerungsverfahren Folgendes umfasst:
falls ein Reinigungsbefehl (201) empfangen wird, Messen der Kapazität des Kissens (163b) unter Verwendung eines Kapazitätsmessers (180);
Berechnen einer in dem Kissen (163b) absorbierten Wassermenge basierend auf der gemessenen Kapazität; und
Steuern des Fahrens und Reinigens der Reinigungswerkzeugbaugruppe (160) basierend auf der berechneten Wassermenge.

## Revendications

1. Robot nettoyeur (100) comprenant :
un corps principal (110) ;
un ensemble mobile (150) pour déplacer le corps principal (110) ;
un ensemble outil de nettoyage (160) comprenant un tampon (163b) qui est installé dans la partie inférieure du corps principal (110) et qui est conçu pour venir en contact avec un sol afin de nettoyer le sol ; et
un dispositif d'alimentation en eau (170) pour fournir de l'eau au tampon (163b),
**caractérisé par** un mesureur de capacité (180) pour mesurer la capacité du tampon (163b) afin de calculer une quantité d'eau absorbée dans le tampon (163b).

2. Robot nettoyeur selon la revendication 1, dans lequel le mesureur de capacité (180) comprend :
un boîtier (181) ayant un premier côté (181b) dont la surface extérieure est en contact avec l'ensemble outil de nettoyage (160), des deuxièmes côtés (181c) qui s'étendent depuis les bords du premier côté (181b), et un récipient (181a) formé par le premier côté (181b) et les deuxièmes côtés (181c) ;
un couvercle (182) pour couvrir le boîtier (181) ;
un substrat à circuits imprimés (CI) (183) disposé dans le récipient (181a) du boîtier (181) de façon à être adjacent à une surface intérieure du premier côté (181b) du boîtier (181) ; et
un premier capteur (184) disposé sur une première surface du substrat à CI (183) de façon à être adjacent à la surface intérieure du premier côté (181b) du boîtier (181), le premier capteur (184) mesurant la capacité de l'ensemble outil de nettoyage (160).

3. Robot nettoyeur selon la revendication 2, dans lequel le mesureur de capacité (180) comprend en outre un deuxième capteur (185) disposé sur une deuxième surface du substrat à CI (183), la deuxième surface étant opposée à la première surface du substrat à CI (183) sur laquelle le premier capteur (184) est disposé, le deuxième capteur (185) mesurant la capacité de l'espace intérieur du récipient (181a) du boîtier (181).

4. Robot nettoyeur selon la revendication 2 ou la revendication 3, dans lequel le mesureur de capacité (180) comprend en outre un élément d'étanchéité (186) disposé entre le premier côté (181c) du boîtier (181) et le substrat à CI (183) afin d'empêcher la formation d'une lame d'air entre le premier côté (181b) du boîtier (181) et le substrat à CI (183), empêchant ainsi le premier capteur (184) d'être en contact avec de l'air.

5. Robot nettoyeur selon la revendication 2, la revendication 3 ou la revendication 4, dans lequel le premier côté (181b) du boîtier (181) du mesureur de capacité (180) a une épaisseur allant d'environ 0,5 mm à environ 1,5 mm.

6. Robot nettoyeur selon l'une quelconque des revendications 2 à 5, dans lequel le boîtier (181) du mesureur de capacité (180) dépasse du corps principal (110) en direction de l'ensemble outil de nettoyage (160).

7. Robot nettoyeur selon l'une quelconque des revendications 2 à 6, dans lequel le mesureur de capacité (160) comprend en outre un élément de contact étroit (187) qui est disposé entre le couvercle (182) et le substrat à CI (183) et qui applique une pression au substrat à CI (183) de façon que le substrat à CI (183) soit en contact étroit avec le premier côté (181b) du boîtier (181).

8. Robot nettoyeur selon l'une quelconque des revendications précédentes, dans lequel :
l'ensemble outil de nettoyage (160) comprend en outre :
un tambour (163a) couplé en rotation au corps principal (110) ; et
un élément d'engrenage (164) qui est raccordé à une extrémité du tambour (163a) et qui fait tourner le tambour (163a),
dans lequel le tampon (163b) est fixé sur une surface extérieure du tambour (163a) pour venir en contact avec un sol ; et
le mesureur de capacité (180) est noyé dans le tampon (163b) de l'ensemble outil de nettoyage (160) avec une épaisseur de recouvrement prédéterminée.

9. Robot nettoyeur selon la revendication 8, dans lequel le tampon (163b) fixé sur la surface extérieure du tambour (163a) a une courbure prédéterminée et
le premier côté du boîtier (181) du mesureur de capacité (180) a une courbure qui correspond à la courbure prédéterminée du tampon (163b).

10. Robot nettoyeur selon l'une quelconque des revendications précédentes, dans lequel le dispositif d'alimentation en eau (170) comprend :
un réservoir d'eau (171) qui est couplé de manière amovible au corps principal (110) et qui stocke de l'eau ;
une pompe (172) qui est raccordée au réservoir d'eau (171) et qui pompe de l'eau stockée dans le réservoir d'eau (171) ; et
un élément de conduit (173, 174) qui est raccordé à la pompe (172) et qui guide l'eau pompée vers l'ensemble outil de nettoyage (160).

11. Robot nettoyeur selon la revendication 10, dans lequel :
l'élément de conduit (173, 174) comprend un premier conduit (174a) et un deuxième conduit (174b) qui divise l'eau pompée par la pompe (172) et qui guide l'eau pompée vers l'ensemble outil de nettoyage (160), et
le corps principal (110) comprend un trou d'insertion (113) dans lequel le mesureur de capacité (180) est inséré et installé, et une pluralité de trous d'alimentation en eau (114) espacés d'une distance prédéterminée du trou d'insertion (113), dans lequel les premier (174a) et deuxième (174b) conduits sont insérés dans la pluralité de trous d'alimentation en eau (114).

12. Robot nettoyeur selon la revendication 11, dans lequel le mesureur de capacité (180) peut être détaché du corps principal (110).

13. Robot nettoyeur selon la revendication 10, la revendication 11 ou la revendication 12, comprenant en outre :
un trou d'alimentation en eau (114) dans lequel l'élément de conduit (173, 174) est inséré et raccordé ; et
un élément de pulvérisation (115, 116) qui est raccordé au trou d'alimentation en eau (114) et qui pulvérise l'eau alimentée à partir du trou d'alimentation en eau (114) sur l'ensemble outil de nettoyage (160).

14. Robot nettoyeur selon la revendication 13, dans lequel le mesureur de capacité (180) dépasse plus bas vers le sol que l'élément de pulvérisation (115, 116).

15. Procédé de commande d'un robot nettoyeur, le robot nettoyeur comportant un corps principal (110), un ensemble mobile (150) qui circule sur un sol en déplaçant le corps principal (110), un ensemble outil de nettoyage (160) comprenant un tampon (163b) qui est couplé en rotation au corps principal (110) et qui nettoie le sol avec de l'eau, et un dispositif d'alimentation en eau (170) pour fournir de l'eau au tampon (163b),
**caractérisé en ce que** le procédé de commande comprend :
si une instruction de nettoyage (201) est reçue, la mesure de la capacité du tampon (163b) en utilisant un mesureur de capacité (180) ;
le calcul d'une quantité d'eau absorbée dans le tampon (163b) sur la base de la capacité mesurée ; et
la commande du déplacement et du nettoyage par l'ensemble outil de nettoyage (160) sur la base de la quantité d'eau calculée.
